## Europäisches Patentamt

## European Patent Office

## Office européen des brevets

(19)

(11) Veröffentlichungsnummer : **0 116 111 B1**

(12) **EUROPÄISCHE PATENTSCHRIFT**

(45) Veröffentlichungstag der Patentschrift :
19.07.89

(21) Anmeldenummer : 83108550.1

(22) Anmeldetag : 30.08.83

(51) Int. Cl.⁴ : **B 21 J 5/12, B 24 B 39/02, B 21 C 37/30**

(54) Maschine für die hydroplastische Bearbeitung von Rohrerzeugnissen.

(30) Priorität : 11.01.83 BG 59297/83

(43) Veröffentlichungstag der Anmeldung :
22.08.84 Patentblatt 84/34

(45) Bekanntmachung des Hinweises auf die Patenterteilung : 19.07.89 Patentblatt 89/29

(84) Benannte Vertragsstaaten :
CH DE FR GB LI SE

(56) Entgegenhaltungen :
BG—A— 23 783
GB—A— 833 989
US—A— 2 515 508
US—A— 3 545 317
US—A— 3 628 400

(73) Patentinhaber : N P S P po HYDROPLASTITSCHNA OBRABOTKA na METALITE
Brjanska-Strasse 31B
Gabrovo (BG)

(72) Erfinder : Petkov, Georgi Kostov, Dipl.-Ing.
Svischtovska-Strasse 94-A
Gabrovo (BG)
Erfinder : Botev, Botjo Pentschev, Dipl.-Ing.
Vidima-Strasse 17
Gabrovo (BG)
Erfinder : Najdenov, Ivan Christov, Dipl.-Ing.
Bolschevik-Strasse 6
Gabrovo (BG)
Erfinder : Metev, Georgi Metev, Dipl.-Ing.
Oktomvriiska-Strasse 6
Gabrovo (BG)
Erfinder : Petrov, Jakim Najdenov, Dipl.-Ing.
Selena-Livada-Strasse 19
Gabrovo (BG)

(74) Vertreter : Finck, Dieter et al
Patentanwälte v. Füner, Ebbinghaus, Finck Mariahilfplatz 2 & 3
D-8000 München 90 (DE)

## Beschreibung

Die Erfindung betrifft eine Maschine für die hydroplastische Bearbeitung von Rohrerzeugnissen durch Bearbeitung ihrer inneren Oberfläche bei Erreichung eines genauen Außenmaßes.

Derartige Maschinen werden bei der Feinbearbeitung der Innenflächen von Zylindern, Muffen und dergleichen eingesetzt, die ein genaues Außenmaß aufweisen.

Aus der BG-A-23 783 ist eine derartige Maschine für die Bearbeitung von zylindrischen Körpern bekannt, bei der abhängig von der Matrizenart eine Öffnung im Körper bis zur erforderlichen Glätte feinbearbeitet oder die äußere Oberfläche des Körpers profiliert werden kann. Die Maschine besteht aus einer senkrechten hydraulischen Presse, an deren beweglichen Support ein Hochdruck-Hydrozylinder bzw. Hydraulikzylinder befestigt ist, der von einem separaten hydraulischen Aggregat gespeist wird. An der Kolbenstange des Hochdruck-Hydrozylinders ist ein Werkzeug für die hydroplastische Verformung beweglich befestigt. Dieses Werkzeug ist ein glattes Druckräumwerkzeug mit einer zentralen Öffnung, die über radiale Kanäle mit den Ausnehmungen zwischen den Zähnen des Räumwerkzeuges verbunden ist. Die Kanäle des Werkzeugs sind so mit dem Hochdruckraum des hydraulischen Zylinders verbunden, wodurch eine Zwangsschmierung der bearbeiteten Oberfläche und des Werkzeugs gewährleistet ist. Am Arbeitstisch der Presse ist ein Ring befestigt, der die Matrize mit dem darin eingelegten Werkstück umfaßt. Das Werkstück selbst ist an seinem unteren Ende durch eine beweglichen Stütze abgestützt.

Mit der bekannten Maschine können zwar einzeln oder gleichzeitig beide Operationen durchgeführt werden, die Maschine hat jedoch nur eine niedrige Stückleistung, da die hydroplastische Bearbeitung nur in einer Arbeitsposition vorgenommen werden kann. Das Laden mit den Werkstücken erfolgt manuell. Außerdem fließt bei der Verformung des Werkstücks zwischen der Matrize und der beweglichen Stütze immer Metall aus, wodurch das bearbeitete Werkstück blockiert wird. Dies erfordert zum Trennen der Stütze vom Werkstück und dem Positionieren im Ring bei jeder Operation ein Auseinanderbauen der gesamten Baugruppe.

Der Erfindung liegt die Aufgabe zugrunde, die Maschine der oben genannten Art so auszubilden, daß die einzelnen Operationen in einem kontinuierlichen automatisierten Zyklus ausgeführt werden können, wobei eine störungsfreie und selbsttätige Entnahme der fertigen Erzeugnisse gewährleistet sein soll.

Diese Aufgabe wird bei der Maschine der genannten Art dadurch gelöst, daß die hydraulische Presse einen Arbeitstisch, auf dem vier Matrizen mit darin eingelegten Werkstücken montiert sind, und die Einrichtung für die hydroplastische Bearbeitung eine tragende Platte aufweisen, an der ein Hochdruck-Hydrozylinder befestigt ist, dessen Kolben starr mit einer Stützplatte verbunden ist, die zwei Räumstangen, welche die Druckräumwerkzeuge in die Rohrerzeugnisse eindrücken, sowie zwei Ausstoßstangen für das gleichzeitige Ausdrücken der fertigen Werkstücke trägt, wobei beide Platten untereinander durch Führungssäulen verbunden sind, die gleitend durch die tragende Platte hindurchgehen, daß koaxial zum Hochdruck-Hydrozylinder auf dem Arbeitstisch der Presse eine Positioniereinrichtung für zwei Bearbeitungspositionen und zwei Ausstoßpositionen vorgesehen ist, wobei jede Position einen durchgehenden Sitz mit darin eingelegter Matrize aufweist, und daß auf der einen Seite der Presse eine Zuführeinrichtung für die Werkstücke, auf der anderen Seite ein Fördermanipulator für die Druckräumwerkzeuge und unterhalb des Arbeitstisches eine Einrichtung für das Abführen der fertig bearbeiteten Werkstücke vorgesehen ist.

Die Ausstoßstangen sind vorteilhafterweise mit je einem axialen Ausgleicher mit Ganggewinde ausgerüstet, der in die Ausstoßstange eingeschraubt ist und dessen Welle an ihrem oberen Ende als Zahnrad ausgebildet ist, das mit einer von einem hydraulischen Zylinder angetriebenen Zahnstange in Eingriff steht.

Die erfindungsgemäße Maschine hat den Vorteil einer mehrfachen Erhöhung der Produktivität, da jeder Arbeitsgang mit der Bearbeitung und dem Ausstoßen der bearbeiteten Werkstücke aus den Matrizen kombiniert wird. Es wird eine völlige Automatisierung des gesamten Prozesses erzielt, also von der Zuführung der Werkstücke bis zu dem Abführen der fertig bearbeiteten Erzeugnisse mit hoher Maßgenauigkeit und Glätte.

Anhand von Zeichnungen wird ein Ausführungsbeispiel der Erfindung näher erläutert. Es zeigt:

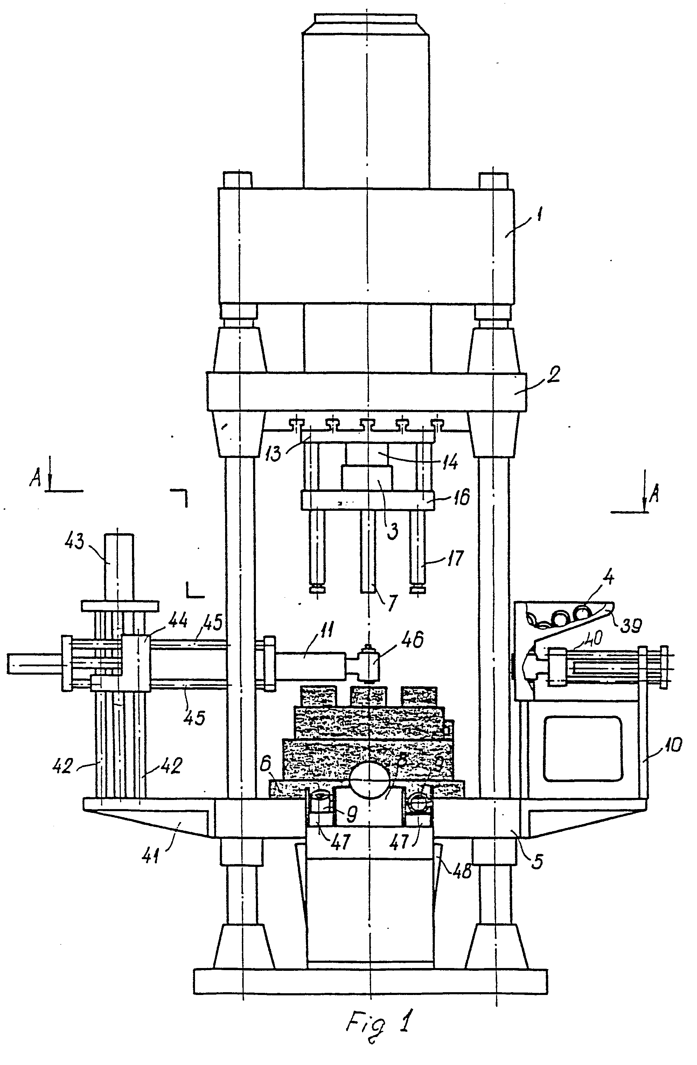

Fig. 1 eine Seitenansicht der Maschine;

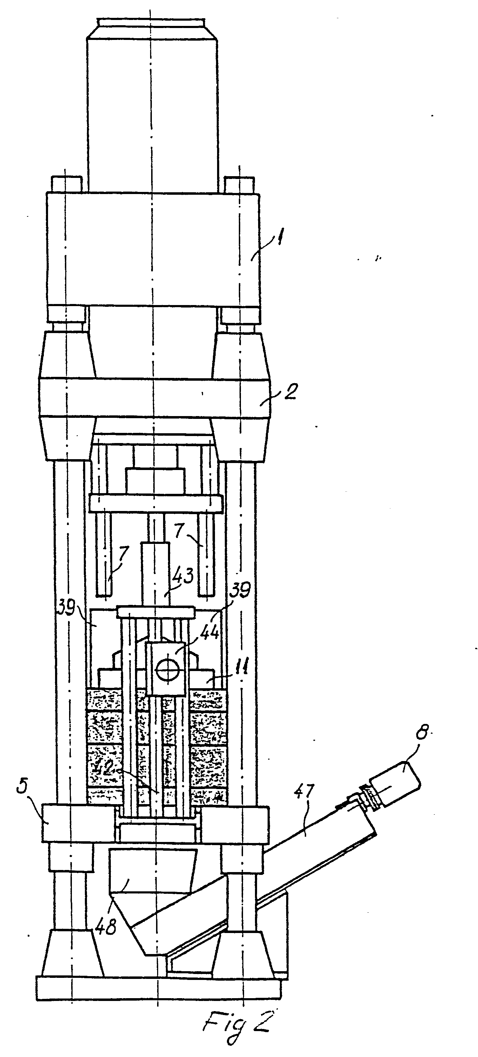

Fig. 2 eine Stirnansicht der Maschine,

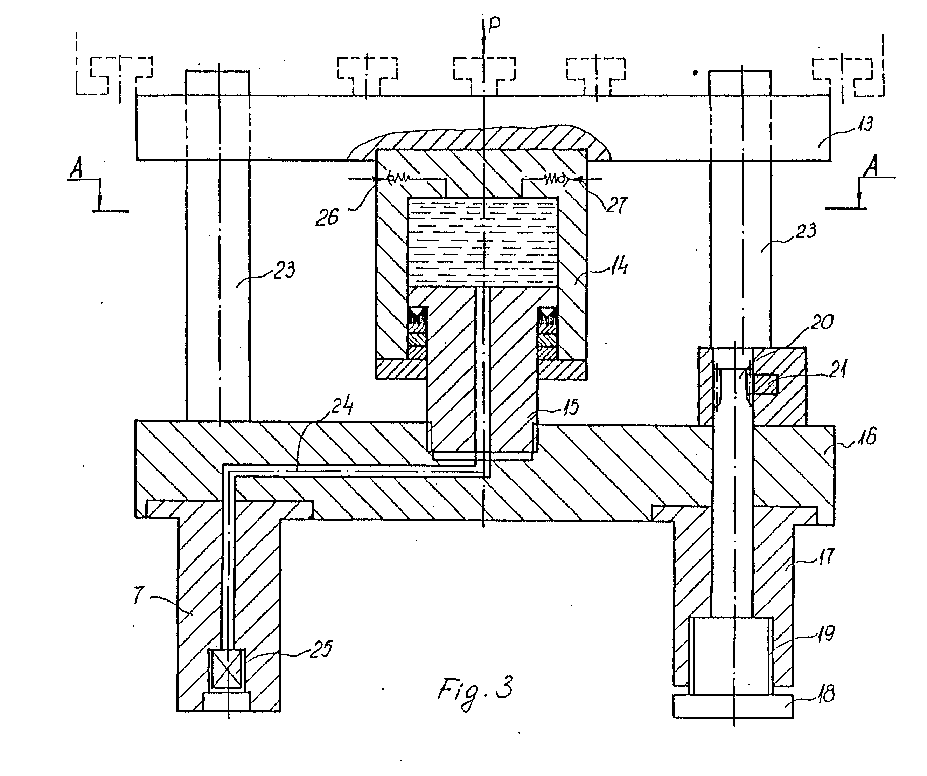

Fig. 3 die Einrichtung für hydroplastische Bearbeitung der Maschine, wobei der Hochdruckzylinder, eine Räumstange und eine Ausstoßstange geschnitten dargestellt sind;

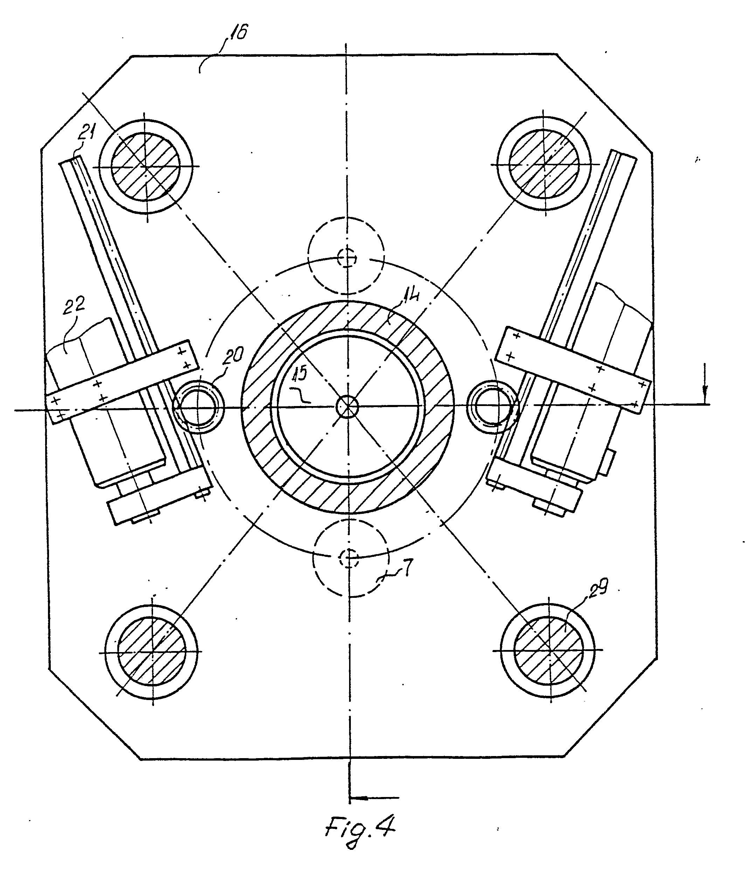

Fig. 4 den Schnitt A-A von Fig. 3;

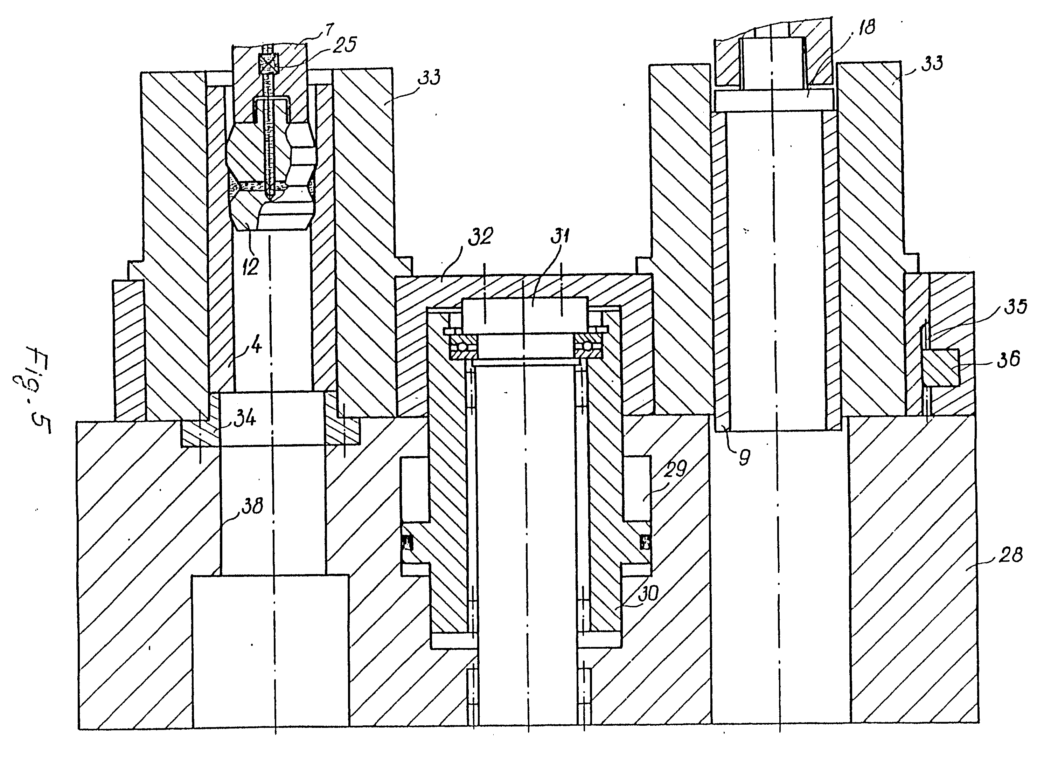

Fig. 5 den rotierenden Positioniertisch in der Position für Bearbeitung und Ausstoßen im Axialschnitt und

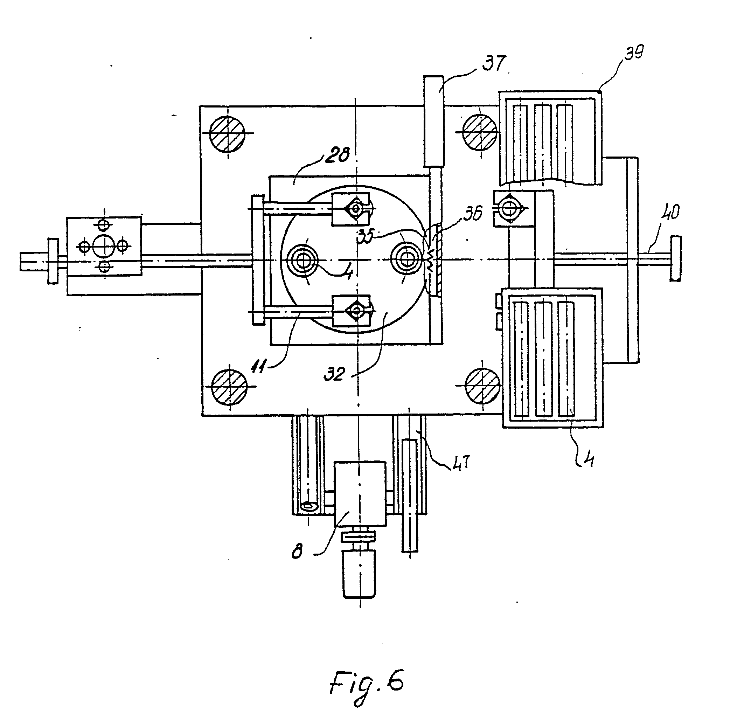

Fig. 6 den Schnitt A-A von Fig. 1.

Die gezeigte Maschine für die hydroplastische Bearbeitung besteht aus einer hydraulischen Presse 1 mit vier senkrechen Säulen, die einen beweglichen Support 2 aufweist, an dem eine Einrichtung 3 für hydroplastische Bearbeitung von Werkstücken 4 befestigt ist.

Auf einem Arbeitstisch 5 der Presse 1 ist eine Positioniereinrichtung 6 montiert, die für das Orientieren der Werkstücke 4 in bezug auf Räumstangen 7 der Einrichtung 3 für hydroplastische Bearbeitung vorgesehen ist.

Unter dem Arbeitstisch 5 der Presse 1 ist eine Einrichtung 8 für das Abführen der bearbeiteten Werkstücke aus dem Arbeitsbereich der Maschine vorgesehen.

Zu beiden Seiten des Arbeitstisches 5 sind eine Einrichtung 10 für das Zuführen der Werkstücke 4 und ein Fördermanipulator 11 für das Fördern von Arbeitswerkzeugen 12 angebracht.

Die Einrichtung 3 für hydroplastische Bearbeitung besteht aus einer tragenden Platte 13, die an dem beweglichen Support 2 der Presse 1 befestigt ist, welche einen Hochdruck-Hydrozylinder bzw. Hydraulikzylinder 14 trägt, der einen Kolben 15 aufweist, an dem eine Stützplatte 16 starr befestigt ist. Die Stützplatte 16 trägt zwei Räumstangen 7, die für das Ausstoßen der Arbeitswerkzeuge 12 durch die bearbeiteten Öffnungen der Werkstücke 4 vorgesehen sind, und außerdem in einem Winkel von 90° zu ihnen versetzt zwei Ausstoßstangen 17. Jede Ausstoßstange 17 hat einen axialen Ausgleicher 18 für das Ausgleichen von Differenzen in den Längen der bearbeiteten Werkstücke, die sich aus Volumenunterschieden der Werkstücke 4 ergeben können. Jeder axiale Ausgleicher 18 ist ein Verlängerungsstück mit einem Ganggewinde 19 im einen Ende und mit einem im anderen Ende ausgearbeiteten Zahnrad 20, das mit einer Zahnstange 21 in Eingriff steht, die von einem hydraulischen Zylinder 22 angetrieben wird.

Die Stützplatte 16 und die tragende Platte 13 sind untereinander durch Führungssäulen 23 verbunden, die gleitend durch die tragende Platte 13 hindurchgehen. Der Arbeitsraum des Hochdruck-Hydrozylinders 14, der mit Arbeitsflüssigkeit von einem selbsttätigen, nicht gezeigten, Aggregat gespeist wird, ist mit den Arbeitswerkzeugen 12 über Kanäle 24 verbunden, die durch die Räumstangen 7, die Stützplatte 16 und den Kolben 15 hindurchgehen. Auf diesem Weg ist im Sitz eines jeden Arbeitswerkzeugs je eine Drossel 25 vorgesehen. Im Eingang für die Arbeitsflüssigkeit sind am Hochdruckzylinder 14 ein Rückschlagventil 26 und ein Entlüftungsventil 27 für den Arbeitsraum vorgesehen.

Die Positioniereinrichtung 6 hat einen Körper 28, der starr an dem Arbeitstisch 5 der Presse 1 befestigt ist und eine zentrale Öffnung 29, von der ein Teil als hydraulischer Zylinder ausgebildet ist, in dem ein hohler Kolben 30 angeordnet ist, der auf eine axial bewegliche Stange 31 gesteckt ist, die im hohlen Kolben 30 und in dem Körper 28 gelagert ist. Der hohle Kolben 30 und die axial bewegliche Stange 31 sind drehbar gegeneinander beweglich. Auf dem Körper 28 ist ein Vierpositions-Drehtisch 32 angeordnet, der von der axial beweglichen Stange 31 getragen wird. Jede Position des Drehtisches 32 hat eine Öffnung, in welcher eine Matrize 33 eingelegt ist. Dabei sind zwei der diametral angeordneten Positionen des Drehtisches 32 für die hydroplastische Bearbeitung der in ihnen eingesetzten Werkstücke 4 vorgesehen, die übrigen zwei Positionen dienen zum Ausstoßen der bearbeiteten Werkstücke 9.

Koaxial zu den Positionen des Drehtisches 32 sind im Körper 28 entsprechende Öffnungen ausgearbeitet, von denen zwei in ihrem oberen Ende Sitze haben, in denen Muffen 34 starr befestigt sind, welche die Werkstücke 4 tragen. Der Innendurchmesser der tragenden Muffen 34 ist größer als der Innendurchmesser des Werkstücks 4. Die Öffnungen im Körper 28 mit den darin angeordneten Muffen 34 enden in zwei parallelen, im Körper 28 ausgearbeiteten Kanälen 38, die für die Aufnahme der Arbeitswerkzeuge 12 vorgesehen sind, die durch das Werkstück 4 hindurchgegangen sind.

Für das Drehen des Drehtisches 32 dient ein an seinem Umfang ausgebildeter Zahnsektor 35, der mit einer Zahnstange 36 in Eingriff steht, die von einem hydraulischen Zylinder 37 angetrieben wird.

Die Einrichtung 10 für die Zuführung der Werkstücke 4 zu der Positioniereinrichtung 6 ist mit Hilfe eines Ständers an dem Arbeitstisch 5 der Presse 1 befestigt. Sie besteht aus zwei Bunkern 39 mit Trennwänden und einem ein Betätigungsglied und zwei Greifer aufweisenden Manipulator 40, der je ein Werkstück 4 aus beiden Bunkern 39 aufnimmt und sie gleichzeitig zu den zwei Positionen der Positioniereinrichtung 6 führt. Der Manipulator 40 ist zwischen den beiden Bunkern 39 parallel zu ihnen angeordnet.

Gegenüber der Zuführeinrichtung 10 ist an dem Arbeitstisch 5 der Presse 1 ein Fördermanipulator 11 für die Arbeitswerkzeuge 12 angeordnet. Er besteht aus einem Unterteil 41, der an der Presse 1 mit Hilfe von zwei senkrechten Säulen 42 befestigt ist, auf denen sich ein durch einen hydraulischen Zylinder 43 angetriebenes Gleitstück 44 bewegt, das zwei sich horizontal bewegende Säulen 45 trägt, welche eine mechanische Hand 46 mit zwei Greifern tragen.

Die Maschine hat weiterhin eine Einrichtung 8 für das Abführen der bearbeiteten Werkstücke 9 mit zwei geneigten Förderern 47 mit gemeinsamem Antrieb, die je einen Aufnahmebehälter 48 haben, der sich jeweils unterhalb der beiden Positionen der Positioniereinrichtung 6 befindet, in denen die bearbeiteten Werkstücke 9 ausgestoßen werden.

Die Maschine arbeitet folgendermaßen : Der Manipulator 40, der die Einrichtung 10 für die Zuführung der Werkstücke 4 bedient, nimmt zwei Werkstücke 4 von den Bunkern 39 auf und trägt sie zu den Arbeitspositionen der Positioniereinrichtung 6, legt die Werkstücke 4 in die Matrizen 33 ein und zieht sich zurück, während der Fördermanipulator 11 die Arbeitswerkzeuge 12 über die Arbeitspositonen bringt. Das Aggregat für die Zuführung der Arbeitsflüssigkeit füllt über das Rückschlagventil 26 den Hochdruck-Hydrozylinder 14 und verschiebt seinen Kolben 15 in die untere Endstellung, wobei gleichzeitig die Kanäle 24 bis zu den Drosseln 25 gefüllt werden.

Der bewegliche Support 2 der Presse 1 bewegt sich zusammen mit der Einrichtung 3 für hydroplastische Bearbeitung abwärts, bis die Räumstangen 7 die Arbeitswerkzeuge 12 greifen und sie gegen die Werkstücke 4 andrücken. Der Manipulator 11 befreit die Arbeitswerkzeuge 12 und gelangt nach Durchlaufen einer C-förmigen Bahn in die Kanäle 38 des Körpers 28. Es beginnt der Arbeitshub der Presse 1, wobei gleichzeitig die Arbeitswerkzeuge 12 mit Arbeitsflüssigkeit umspült werden, die durch die Drossel 25 fließt. Bei der Bewegung der Arbeitswerkzeuge 12 in den Werkstücken 4 erfolgt zuerst ein Vordornen der bearbeiteten Oberfläche mit reichlichem Schmieren, ohne daß das Endmaß des Werkstücks erreicht wird. Beim völligen Eindringen der Arbeitswerkzeuge 12 in die Werkstücke 4 werden die Räume zwischen den Zähnen der Werkzeuge geschlossen, der Arbeitsdruck im Hochdruck-Hydrozylinder 14 steigt stark an und erreicht einige tausend Bar. Die Arbeitswerkzeuge 12, die weiterhin abwärts durch die Kraft der Presse 1 verschoben werden, sorgen dann für die Feinbearbeitung der Werkstücke 4 durch hydroplastische Verformung.

Weiterhin werden die durch die fertig bearbeiteten Werkstücke 9 hindurchgegangenen Arbeitswerkzeuge 12 vom Fördermanipulator 11 erfaßt, dessen Greifer in entgegengesetzter Richtung eine C-förmige Bahnbewegung ausführt und sie für die nachfolgende Zuführung zu den Arbeitspositionen herausführt. Der bewegliche Support 2 der Presse 1 wird aufwärts in die Ausgangsstellung gezogen, während sich der Drehtisch 32 der Positioniereinrichtung 6 unter der Einwirkung des im Körper 28 eingebauten hydraulischen Zylinder 29 durch dessen Kolben 30 gehoben und durch die Zahnstange 36 um 90° gedreht wird, wobei die Matrizen mit den bearbeiteten Werkstücken 9 unter die Ausstoßstangen 17 kommen, wonach der Kolben 30 den Drehtisch in die Ausgangsstellung herunterführt.

Es folgt ein neues Laden mit Werkstücken 4 und eine Wiederholung der beschriebenen Operationen. Dabei werden, vor dem Beginn des Arbeitsgangs des beweglichen Supports 2, die axialen Ausgleicher 18 durch die entsprechenden hydraulischen Zylinder 22 und Zahnstangen 21 bis zu ihrem Anpressen an den bearbeiteten Werkstücken 9 vorgetrieben. Weiterhin erfolgt gleichzeitig mit der Bearbeitung beider Werkstücke 4 auch das Ausstoßen der fertigen Werkstücke 9, die durch die Abführeinrichtung 8 abgeführt werden. Beim Zurückkehren des beweglichen Supports 2 aufwärts werden auch die axialen Ausgleicher 18 zurückgezogen.

Der größte Teil der aufeinanderfolgend beschriebenen Operationen erfolgt gleichzeitig, wodurch der Zyklus von der Zuführung der Werkstücke 4 bis zum Abführen der fertigen Werkstücke 9 auf Minimum verkürzt werden kann.

## Patentansprüche

1. Maschine für die hydroplastische Bearbeitung von Rohrerzeugnissen durch Bearbeitung ihrer inneren Oberfläche bei Erreichung eines genauen Außenmaßes, bestehend aus einer senkrechten hydraulischen Presse, an deren beweglichen Support eine Einrichtung für hydroplastische Bearbeitung mittels Druckräumwerkzeugen befestigt ist und an deren Arbeitstisch vier Matrizen mit darin eingelegten Werkstücken montiert sind, wobei die Einrichtung (3) für die hydroplastische Bearbeitung eine tragende Platte (13) aufweist, an der ein Hochdruck-Hydrozylinder (14) befestigt ist, dessen Kolben (15) starr mit einer Stützplatte (16) verbunden ist, die zwei Räumstangen (7), welche die Druckräumwerkzeuge (12) in die Rohrerzeugnisse eindrücken, sowie zwei Ausstoßstangen (17) für das gleichzeitige Ausdrücken der fertigen Werkstücke trägt, wobei beide Platten (13, 16) untereinander durch Führungssäulen (23) verbunden sind, die gleitend durch die tragende Platte (13) hindurchgehen, und wobei koaxial zum Hochdruck-Hydrozylinder (14) auf dem Arbeitstisch der Presse (1) eine Positioniereinrichtung (6) für zwei Bearbeitungspositionen und zwei Ausstoßpositionen vorgesehen ist, wobei jede Position einen durchgehenden Sitz mit darin eingelegter Matrize aufweist, und wobei schließlich auf der einen Seite der Presse (1) eine Zuführeinrichtung (10) für die Werkstücke (4), auf der anderen Seite ein Fördermanipulator (11) für die Druckräumwerkzeuge (12) und unterhalb des Arbeitstisches (5) eine Einrichtung (8) für das Abführen der fertig bearbeiteten Werkstücke (9) vorgesehen ist.

2. Maschine nach Anspruch 1, dadurch gekennzeichnet, daß die Ausstoßstangen (17) mit je einem axialen Ausgleicher (18) mit Ganggewinde (19) ausgerüstet sind, der in die Ausstoßstange (17) eingeschraubt ist und dessen Welle an ihrem oberen Ende als Zahnrad (20) ausgebildet ist, das mit einer vom einem hydraulischen Zylinder (22) angetriebenen Zahnstange (21) in Eingriff steht.

3. Maschine nach Anspruch 1, dadurch gekennzeichnet, daß die Positioniereinrichtung (6) einen Körper (28) aufweist, der starr an den Arbeitstisch (5) der Presse (1) befestigt ist, und eine zentrale konzentrisch angeordnete Öffnung (29) aufweist, die einen hydraulischen Zylinder bildet, in dem ein hohler Kolben (30) angeordnet ist, durch den sich eine mit ihm axial bewegliche Stange (31) erstreckt, die einen Vierpositions-Drehtisch (32) trägt, wobei jede Position einen durchgehenden Sitz mit darin eingelegter Matrize (33) aufweist.

4. Maschine nach Anspruch 1 und 3, dadurch gekennzeichnet, daß in zwei diametral angeordneten Öffnungen des Körpers (28) in der Ebene der Bewegung des Drehtisches (32) Sitze mit fest eingelegten tragenden Muffen (34) vorgesehen sind, deren Innendurchmesser größer ist als die innere Öffnung des Werkstücks (4), und daß unter den Öffnungen im Körper (28) der Positioniereinrichtung (6) Kanäle (38) für die Aufnahme der Arbeitswerkzeuge (12) ausgespart sind.

5. Maschine nach Anspruch 4, dadurch gekennzeichnet, daß im Umfang des Drehtisches (32) ein Zahnsektor (35) ausgebildet ist, der mit einer Zahnstange (36) in Eingriff steht, die durch einen hydraulischen Zylinder (37) angetrieben wird.

6. Maschine nach Anspruch 1, dadurch gekennzeichnet, daß die Einrichtung (10) für die Zuführung der Werkstücke (4) zwei separate Bunker (39) mit Trennwänden und einen mit zwei Greifern versehenen Manipulator (40) aufweist, der zwischen den beiden Bunkern (39) und parallel zu ihnen angeordnet ist.

7. Maschine nach Anspruch 1, dadurch gekennzeichnet, daß der Fördermanipulator (11) aus einem Unterteil (41) besteht, der an der Presse (1) auf zwei senkrechten Säulen (42) angebracht ist, auf denen frei ein Gleitstück (44) angeordnet ist, das mit einem hydraulischen Zylinder (43) verbunden ist und horizontale Säulen (45) trägt, an denen eine mechanische Hand (46) befestigt ist.

## Claims

1. Machine for the hydroplastic shaping of piping products by shaping their inner surface when a precise external measurement is attained consisting of a vertical hydraulic press to whose moveable support is secured a device for hydroplastic shaping by means of pushbroaching tools, and to whose work table are attached four matrices with work pieces located in them, with the device (3) for hydroplastic shaping having a carrying plate (13) to which is attached a high pressure hydraulic cylinder (14), the piston (15) of which is rigidly connected to a support plate (16), which carries two broaching bars (7) which force the push-broaching tools (12) into the piping products, as well as two ejecting bars (17) for forcing out the finished work pieces at the same time, the two plates (13, 16) being connected together by means of guide supports (23) which slide through the carrying plate (13), and with a positioning device (6) being provided, coaxial to the high pressure hydraulic cylinder (14), on the work table of the press (1), for two shaping positions and two ejecting positions, each position having a seat passing through it with a matrix located in the seat, and with finally a delivery device (10) for the work pieces (4) being provided on one side of the press (1), a conveying manipulator (11) for the push-broaching tools (12) being provided on the other side, and a device (8) for removing the finished, shaped work pieces (9) being provided beneath the work table (5).

2. Machine according to claim 1, characterised in that the ejecting bars (17) are each supplied with a threaded axial compensator (18) with a thread (19), which is screwed into the ejecting bar (17), and the shaft of which is formed at the upper end as a toothed wheel (20) which engages with a toothed rack (21) driven by a hydraulic cylinder (22).

3. Machine according to claim 1, characterised in that the positioning device (6) has a body (28) which is rigidly connected to the work table (5) of the press (1), and has a central, concentrically arranged opening (29) which forms a hydraulic cylinder, in which there is arranged a hollow piston (30) through which extends a bar (31) which is axially moveable with it, which bar (31) supports a four-position rotating table (32), each position having a seat passing through it with a matrix (33) located in the seat.

4. Machine according to claims 1 and 3, characterised in that, in two diametrically arranged openings of the body (28), in the plane of motion of the rotating table (32), are provided seats having firmly located carrying sleeves (34) whose internal diameter is greater than the inner opening of the work piece (4), and that grooves (38) are cut beneath the openings in the body (28) of the positioning device (6) to receive the work tools (12).

5. Machine according to claim 4, characterised in that a toothed sector (35) which engages with a toothed rack (36) driven by a hydraulic cylinder (37) is formed on the perimeter of the rotating table (32).

6. Machine according to claim 1, characterised in that the device (10) for delivering work pieces (4) has two separate bins (39) with partitions, and a manipulator (40) which is provided with two grippers, the manipulator (40) being arranged between the two bins (39) and parallel to them.

7. Machine according to claim 1, characterised in that the conveying manipulator (11) consists of a lower part (41) which is atached to the press (1) on two vertical supports (42) on which there is independently arranged a sliding member (44) which is connected to a hydraulic cylinder (43) and carries horizontal supports (45) to which a mechanical hand (46) is attached.

## Revendications

1. Machine pour le traitement hydroplastique de pièces tubulaires par l'usinage de leur surface intérieure lors de l'obtention d'une cote extérieure précise, constituée par une presse hydraulique verticale sur le support mobile de laquelle est fixé un dispositif utilisé pour exécuter un traitement hydroplastique à l'aide d'outils de brochage sous pression et sur la table de travail de laquelle sont montées quatre matrices dans lesquelles sont insérées des pièces à traiter, le dispositif (3) pour exécuter le traitement hydroplastique comportant une plaque portante (13) sur laquelle est fixé un vérin hydraulique à haute pression (14) dont le piston (15) est relié rigidement à une plaque de support (16) portant deux tiges de brochage (7) qui enfoncent les outils de brochage sous pression (12) dans les pièces tubulaires, ainsi que deux tiges d'éjection (17) utilisées pour éjecter simultanément les pièces terminées, les deux plaques (13, 16) étant reliées entre elles par des colonnes de guidage (23) traversant en glissant la plaque portante (13), un dispositif de positionnement (6) pour le réglage de deux positions de traitement et de deux positions d'éjection étant prévu sur la table de travail de la presse (1), coaxialement par rapport au vérin pneumatique à haute pression (14), chaque position présentant un siège continu dans lequel est insérée une matrice, et étant enfin prévus un dispositif d'amenée (10) des pièces à traiter (4) d'un côté de la presse (1), un manipulateur de transfert (11) pour les outils de brochage sous pression (12) de l'autre côté, et un dispositif (8) pour évacuer les pièces (9) dont le traitement est terminé au-dessous de la table de travail (5).

2. Machine selon la revendication 1, caractérisée en ce que les tiges d'éjection (17) sont équipées chacune d'un compensateur axial (18) muni d'un filetage d'avancement (19) vissé dans la tige d'éjection (17) et dont l'axe est réalisé, au niveau de son extrémité supérieure, sous la forme d'un pignon (20) qui engrène avec une crémaillère (21) entraînée par un vérin hydraulique (22).

3. Machine selon la revendication 1, caractérisée en ce que le dispositif de positionnement (6) comporte un corps (28) fixé rigidement à la table de travail (5) de la presse (1), et possède une ouverture centrale concentrique (29) formant un cylindre hydraulique dans lequel est disposé un piston creux (30) à l'intérieur duquel s'étend une tige (31) qui est mobile axialement avec lui et porte un plateau rotatif (32) à quatre positions, chaque position présentant un siège continu dans lequel est insérée une matrice (33).

4. Machine selon les revendications 1 et 3, caractérisée en ce que dans deux ouvertures diamétralement opposées du corps (28), des sièges possédant des manchons de support (34) insérés de façon fixe et dont le diamètre intérieur est supérieur à l'ouverture intérieure de la pièce à traiter (4), sont prévus dans le plan de déplacement du plateau rotatif (32), et en ce que des canaux (38) servant à recevoir les outils de travail (12) sont ménagés au-dessous des ouvertures ménagées dans le corps (28) du dispositif de positionnement (6).

5. Machine selon la revendication 4, caractérisée en ce que dans le pourtour du plateau rotatif (32) est formé un secteur denté (35) engrènant avec une crémaillère (36) entraînée par un vérin hydraulique (37).

6. Machine selon la revendication 1, caractérisée en ce que le dispositif (10) servant à amener les pièces à traiter (4) comporte deux enceintes séparées (39) munies de parois de séparation, et un manipulateur (40) pourvu de deux dispositifs de saisie et disposé entre les deux enceintes (39), parallèlement à ces dernières.

7. Machine selon la revendication 1, caractérisée en ce que le manipulateur de transfert (11) est constitué par une partie inférieure (41) installée sur la presse (1), sur deux colonnes verticales (42) sur lesquelles est monté libre un coulisseau (44) relié à un vérin hydraulique (43) et portant des colonnes horizontales (45) auxquelles est fixée une main mécanique (46).

Fig 1

*Fig 2*

Fig. 3

3

Fig.4

Fig. 5

EPO 116 111B1

Fig. 6